# EUROPEAN PATENT SPECIFICATION

(11) **EP 3 760 899 B1**
(45) Date of publication and mention of the grant of the patent: **26.08.2026**
(21) Application number: 20183728.3
(22) Date of filing: 02.07.2020
(51) Int. Cl.: F16J 15/02, F16J 15/06, F16K 1/36, F16K 1/42, F16K 1/54, F16K 25/00

(54) **VALVE ARRANGEMENT**
VENTILANORDNUNG
AGENCEMENT DE SOUPAPE

(30) Priority: 04.07.2019 SE 1950844
(43) Date of publication of application: 06.01.2021
(73) Proprietor: Purmo Group Sweden AB, 285 21 Markaryd (SE)
(72) Inventor: Arvidsson, Thomas, 34135 Ljungby (SE)
(74) Representative: Bergenstråhle & Partners AB

(56) References cited:
- EP-A1- 2 600 046
- WO-A1-02/12766
- FR-A2- 2 437 546
- SE-A1- 1 750 519
- US-A- 4 105 187
- US-B2- 9 897 221

## Description

### Field of the invention

The present disclosure relates to a valve arrangement, comprising a valve seat and a valve member, configured to move axially in a cut-off direction towards and away from the valve seat to control a fluid flow, the valve member comprising a ring-shaped, elastic sealing lip, forming a ring-shaped cut-off interface with an opposing, ring-shaped landing surface of the valve seat.

### Technical background

Such a valve arrangement is described in for instance SE-526585-C2. The valve arrangement may be controlled by a thermostat such that a suitable amount of hot water is fed to a radiator to keep a room at a desired temperature. The flow of water is controlled with high precision by the distance between the valve member and the valve seat.

SE-1750519-A1 describes a valve arrangement with a valve member moving axially towards and away from a valve seat to control a fluid flow. The valve member has a circular front surface facing the valve seat and comprises an elastic material. The front surface includes a circular, cut-off portion, and comprises protrusions rising from the front surface outside the cut-off portion to releive the latter from stress when fully closed.

One problem associated with such valve arrangements is how to obtain an improved control precision, e.g. when the valve arrangement operates in a range where only very little water is let through.

### Summary of the invention

One object of the present disclosure is therefore to provide a valve arrangement with improved precision.

This object is achieved by a valve arrangement as defined in claim 1. More specifically, in a valve arrangement of the initially mentioned kind, the ring-shaped cut-off interface has a height varying in the cut-off direction, such that, in a fully open position of the valve arrangement, the cut-off interface is open along its circumference and, in an intermediate position, where the valve arrangement is closer to a minimum flow position, fluid flow is allowed along a fraction of the circumference of the cut-of interface while parts of the sealing lip abut the valve seat in abutting sections, the fluid flow being allowed in open sections therebetween, and, in a closed position, the open sections are eliminated. This is accomplished by the sealing lip having a wave-shaped profile along its entire circumference, such that different parts of the sealing lip abuts for instance the opposing valve seat landing area at different valve member to valve seat distances. The resulting characteristics provides an improved precision.

The sealing lip may comprise one or more waves or dents, typically 2-8, facing the cut-off interface. The dents may be curved to provide a smooth characteristic.

Dents with different heights may be provided, cutting of flow at different positions between the open position and the minimum flow position. This gives a great freedom of design to provide desired lift-to-flow characteristic.

### Brief description of the drawings

Fig 1 shows a cross-section of a valve arrangement according to the present disclosure.
Figs 2A and 2B show perspective views of an example of a valve member according to the present disclosure.
Fig 3A-3D illustrate schematically the operation of a valve member as shown in fig 2 in different positions in relation to a valve seat.
Figs 4A-4D illustrate schematically different variations of a valve member and valve seat combination, where figs 4B and 4C depict examples that are not considered part of the present invention.
Fig 5 is a diagram illustrating a comparison between a valve member according to the present disclosure and a known type valve member.

### Detailed description

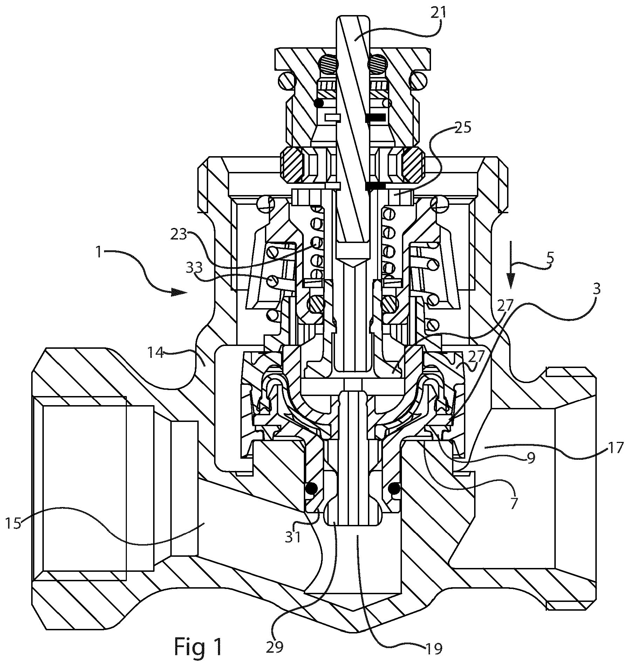

Fig 1 shows a valve arrangement 1 according to the present disclosure where a valve member 3, also according to the present disclosure, may be used and which may be regulated by means of a thermostatic regulator/thermostat (not shown). The valve comprises a valve body 14 which has an inlet 15 and an outlet 17. Between the inlet 15 and the outlet 17, there is a bore 19 through which water flows when the valve is open. In the illustrated case, the valve arrangement 1 however is closed.

The valve can be actuated by a movement device which may typically be a thermostat. On closure of the valve, the movement device (not shown) acts by pressing a pin 21 inwards in the valve arrangement 1. This may occur if the room in which the valve arrangement 1 is located becomes too warm, and a fluid flow to a radiator is to be reduced. The pin in turn urges the valve member 3 in a cut-off direction 5 towards a valve seat 7, i.e. downwards as illustrated in the drawing. This is done in opposition to a return spring 23, which, if the room again becomes colder and the thermostat or other movement device recedes, forces the valve member 3 away from the valve seat 7, thereby increasing again the fluid flow to the radiator.

The pin 21 is connected to the valve member 3 via intermediate parts 25, 27. In the closed position, a sealing lip 9 of the valve member 3 abuts against the valve seat 7 at the gland of the bore 19 to shut off the fluid flow substantially fully.

A control action may thus be obtained, where the flow through the valve is gradually throttled or released, respectively, when the valve member 3 moves in the cut-off direction 5 or in the opposite direction. The present disclosure is related to how to form a cut-interface between a valve member 3 and a valve seat 7 in an improved way.

The control valve arrangement illustrated in fig 1 is provided with a second valve member 29 and a second valve seat 31 which in combination with a pressure control spring 33 controls the fluid flow also based on the pressure drop over the valve arrangement 1 such that a pressure compensated control is obtained. However, the present disclosure is as useful in control valve arrangements that are not pressure compensated, having only the valve member 3 and the valve seat 7.

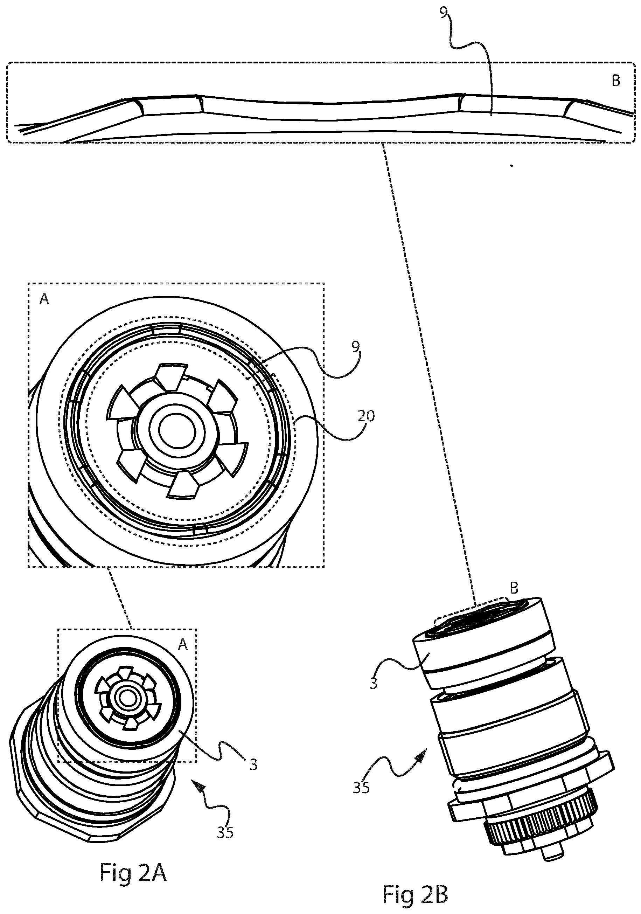

Fig 2A and 2B show perspective views of an example of a valve member insert 35 according to the present disclosure with some details corresponding to fig 1 removed in order not to obscure the valve member sealing details. By a valve member insert 35 is here meant the portion inserted in the valve arrangement housing 3 and making up the parts from the pin 21 to the portion of the valve member 3 facing the valve seat. Such a valve member insert may be produced as a separate unit and may be fitted in an already installed legacy-type valve arrangement replacing a valve member insert not having the advantages disclosed herein. The views in figs 2A and 2B are seen obliquely in different angles in the direction from the valve seat 7 (cf. fig 1).

As is best seen in the enlarged portion B of fig 2B, the sealing lip 9 of the valve member 3 has a shape where the distance it protrudes from the remainder of the valve member 3 end surface differs along the sealing lip 9. This is expressed as the sealing lip 9 having dents or being wave-shaped along its circumference.

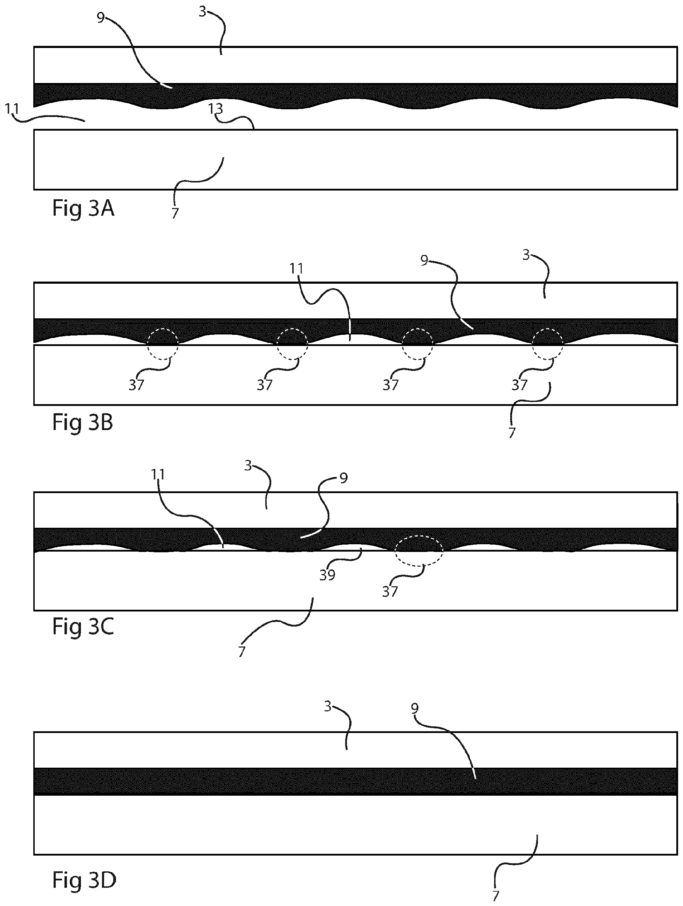

This means that a ring-shaped cut-off interface is formed between the sealing lip 9 and the valve seat 7, which will have a height varying in the cut-off direction, which gives the effect that will now be described with reference to figs 3A-3D. The ring-shaped cut-off interface is located in an area in between the valve member 3 and the valve seat 7, where the valve arrangement can substantially shut the fluid flow off.

These figures illustrate schematically the operation of a valve member as shown in fig 2A in different positions in relation to a valve seat 7. Shown in fig 3A, for instance, a schematically the folded-out circumference 20 of the ring-shaped sealing lip 9 on the valve member end surface as indicated with dashed lines in the enlarged portion A in fig 2A, and the corresponding portion of the valve seat 7 forming the cut-off interface 11 therebetween. Thus, the valve member 3 comprises a ring-shaped, elastic sealing lip 9, forming a ring-shaped cut-off interface 11 with an opposing, ring-shaped landing surface 13 of the valve seat 7.

Fig 3A shows the valve arrangement in the fully open position, where along the entire sealing lip 9 there is provided a cut-off interface 11 that is open. The entire circumference is therefore available for fluid flow.

In fig 3B, the thermostat has acted on the valve arrangement to reduce the fluid flow. by moving the valve member closer to the valve seat 7. Here, in an intermediate position, where the valve member 3 is closer to a minimum flow position, the parts of the sealing lip 9 that protrude most from the valve member end surface begin to abut the valve seat 7. Fluid flow is still allowed along most of the cut-off interface 11 between the valve member 3 and the valve seat 9, but there are now formed sections 37 along the sealing lip circumference where flow is cut off although the valve arrangement is still not closed.

In fig 3C, the valve member 3 has moved even closer to the valve seat 7, and the abutting sections 37 where the sealing lip 9 abuts the seat have become longer. There are however still open sections 39 in between the abutting sections 37.

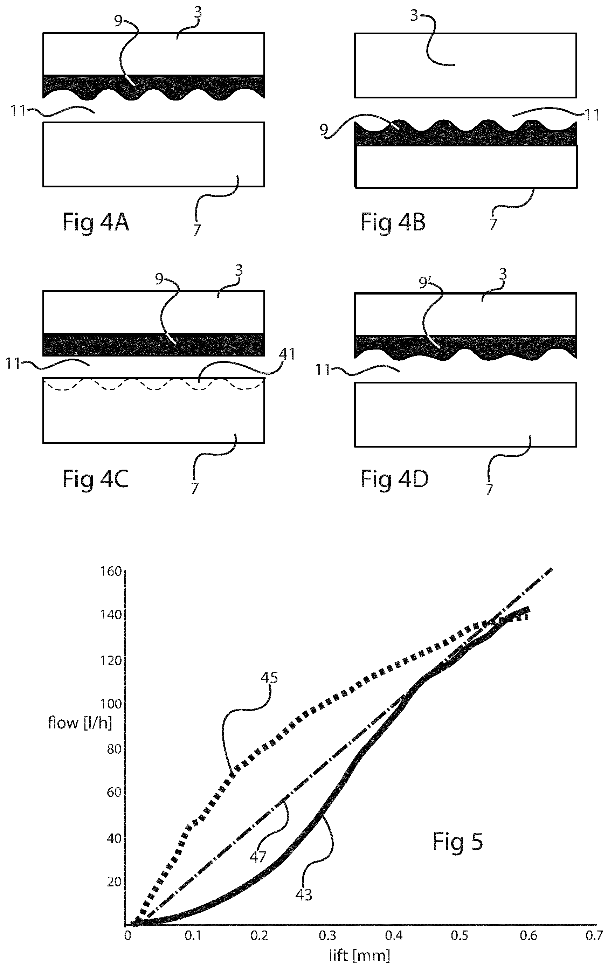

In fig 3D, the valve member 3 has reached a closed position where the open sections are eliminated, and fluid flow is shut off except for some minor residual leakage. With reference to fig 5, there is shown a diagram with a comparison between characteristics 43 of a valve arrangement according to the present disclosure (solid line), specifically as outlined in figs 1 and 2A-2B and a characteristics 45 of a known type of valve arrangement (dashed line) having a straight lip giving a uniform cut-off interface along the sealing lip circumference. As shown, the valve arrangement according to the present disclosure has a significantly improved precision for controlling small flows. The valve thus has an improved sensitivity so that a given small change in lift from the valve seat gives only a small flow change. By this, the valve is given a significantly improved precision which is technically preferred, and it also can reduce tolerance requirements for the valve parts.

Further, it has been shown that variations within a group of valves, in terms of flow variations for a given lift from the valve seat, becomes much smaller, which reduces tolerance requirements.

It is also possible to design an arbitrary lift-to-flow characteristic by providing different numbers of notches with different depths and shapes. For instance, it would be possible to obtain a linear characteristic 47 for a given pressure drop, as indicated by the dash-dot line.

It is possible to vary the disclosed concept in a number of ways which is schematically shown in figs 4A-4D illustrating different valve member and valve seat combinations in schematic views similar to fig 3A.

FIG 4A illustrates the basic embodiment with a valve member 3 having a sealing lip 9 with a wave-shaped profile facing the valve seat 7. The example of fig 4B has instead the sealing lip 9 located on the valve seat's 7 side of the cut-off interface 11.

Another example, not forming part of the present invention, would be to provide a straight sealing lip 9 as illustrated in fig 4C. There, the cut-off interface of varying height is instead provided by means of dents 41 in the seat 7 surface.

Finally, in fig 4D there is shown a variation of the basic embodiment in fig 4A where the sealing lip 9 profile incorporates waves or dents of different heights. This means that there can be provided, by using different profiles, for instance a desired arbitrary relationship between the valve member's 3 lift from the valve seat 7 and the resulting cut-off interface area.

The present disclosure is not restricted to the examples above and may be varied and altered in different ways within the scope of the appended claims.

## Claims

1. A valve arrangement (1), comprising a valve seat (7) and a valve member (3) configured to move axially in a cut-off direction (5) towards and away from the valve seat (7) to control a fluid flow, the valve member (3) comprising a ring-shaped, elastic sealing lip (9), forming a ring-shaped cut-off interface (11) with an opposing, ring-shaped landing surface (13) of the valve seat (7), **characterized by** the sealing lip (9) being wave-shaped along its entire circumference, wherein the ring-shaped cut-off interface (11) having a height in the cut-off direction varying along its circumference, such that, in a fully open position of the valve arrangement (1), the cut-off interface (11) is open along its circumference, in an intermediate position, where the valve arrangement is closer to a minimum flow position, fluid flow is allowed along a fraction of the circumference of the cut-off interface (11) while parts of the sealing lip (9) abut the valve seat (7) in abutting sections (37), the fluid flow being allowed in open sections (39) therebetween, and, in a closed position, the open sections (39) are eliminated.

2. Valve arrangement according to claim 1, wherein the sealing lip comprises one or more waves or dents facing the cut-off interface.

3. Valve arrangement according to claim 2, wherein said one or more dents are curved.

4. Valve arrangement according to claim 2 or 3, wherein dents with different heights are provided, cutting off flow at different positions between the open position and the minimum flow position.

5. Valve arrangement according to any of claims 2 to 4, wherein 2-8 dents are provided.

## Patentansprüche

1. Ventilanordnung (1), umfassend einen Ventilsitz (7) und ein Ventilglied (3), das dazu ausgestaltet ist, sich axial in einer Absperrrichtung (5) zu dem Ventilsitz (7) hin und von diesem weg zu bewegen, um einen Fluidstrom zu steuern, wobei das Ventilglied (3) eine ringförmige elastische Dichtlippe (9) umfasst, die eine ringförmige Absperrschnittstelle (11) mit einer gegenüberliegenden, ringförmigen Anlagefläche (13) des Ventilsitzes (7) bildet, **dadurch gekennzeichnet, dass** Dichtlippe (9) entlang ihres gesamten Umfangs wellenförmig ist, wobei die ringförmige Absperrschnittstelle (11) eine Höhe in der Absperrrichtung aufweist, die entlang ihres Umfangs variiert, so dass in einer vollständig offenen Position der Ventilanordnung (1) die Absperrschnittstelle (11) entlang ihres Umfangs offen ist, in einer Zwischenposition, in der die Ventilanordnung näher einer Mindestströmungsposition ist, Fluidstrom entlang eines Bruchteils des Umfangs der Absperrschnittstelle (11) gestattet ist, während Teile der Dichtlippe (9) in aneinander anliegenden Abschnitten (37) an dem Ventilsitz (7) anliegen, wobei der Fluidstrom in offenen Abschnitten (39) dazwischen gestattet ist, und in einer geschlossenen Position die offenen Abschnitte (39) eliminiert sind.

2. Ventilanordnung nach Anspruch 1, wobei die Dichtlippe eine oder mehrere Wellen oder Vertiefungen umfasst, die der Absperrschnittstelle zugewandt sind.

3. Ventilanordnung nach Anspruch 2, wobei die eine oder die mehreren Vertiefungen gekrümmt sind.

4. Ventilanordnung nach Anspruch 2 oder 3, wobei Vertiefungen mit unterschiedlichen Höhen vorgesehen sind, die den Durchfluss an unterschiedlichen Positionen zwischen der offenen Position und der Mindestströmungsposition absperren.

5. Ventilanordnung nach einem der Ansprüche 2 bis 4, wobei 2 - 8 Vertiefungen bereitgestellt sind.

## Revendications

1. Structure de vanne (1) comprenant un siège de vanne (7) et un obturateur (3) conçu pour se déplacer axialement dans une direction de coupure (5) vers et à l'écart du siège de vanne (7) pour réguler un écoulement de fluide, l'obturateur (3) comprenant une lèvre d'étanchéité élastique (9) de forme annulaire, formant une interface de coupure (11) de forme annulaire avec une surface d'appui (13) opposée de forme annulaire du siège de vanne (7), **caractérisé en ce que** la lèvre d'étanchéité (9) est ondulée sur toute sa circonférence, l'interface de coupure (11) de forme annulaire présentant une hauteur dans la direction de coupure variant le long de sa circonférence, de telle sorte que, dans une position complètement ouverte de la structure de vanne (1), l'interface de coupure (11) soit ouverte le long de sa circonférence, dans une position intermédiaire, dans laquelle la structure de vanne est plus proche d'une position d'écoulement minimal, un écoulement de fluide soit possible le long d'une fraction de la circonférence de l'interface de coupure (11) tandis que des parties de la lèvre d'étanchéité (9) sont en appui contre le siège de vanne (7) dans des sections de contact (37), l'écoulement de fluide étant possible dans des sections ouvertes (39) entre celles-ci et, dans une position fermée, les sections ouvertes (39) soient éliminées.

2. Structure de vanne selon la revendication 1, dans laquelle la lèvre d'étanchéité présente une ou plusieurs ondulations ou renfoncements faisant face à l'interface de coupure.

3. Structure de vanne selon la revendication 2, dans laquelle lesdits un ou plusieurs renfoncements sont incurvés.

4. Structure de vanne selon la revendication 2 ou 3, dans laquelle des renfoncements de différentes hauteurs sont définis, coupant l'écoulement à différentes positions entre la position ouverte et la position d'écoulement minimal.

5. Structure de vanne selon l'une quelconque des revendications 2 à 4, dans laquelle 2 à 8 renfoncements sont définis.
